# FASCICULE DE BREVET EUROPEEN

(11) **EP 0 678 683 B1**
(45) Date de publication et mention de la délivrance du brevet: **16.10.2002**
(21) Numéro de dépôt: 95400809.0
(22) Date de dépôt: 11.04.1995
(51) Int. Cl.: F16C 35/06, F16B 21/18

(54) **Organe de retenue axiale d'un roulement à capteur d'informations et montage de roulement comportant un tel organe**
Axialhalteelement für ein Wälzlager mit Messwertaufnehmer und Lageranordnung mit einem solchen Element
Axial retaining element for a rolling bearing with an information sensor and bearing mounting with such an element

(30) Priorité: 15.04.1994 FR 9404514
(43) Date de publication de la demande: 25.10.1995
(73) Titulaire: SKF FRANCE, F-92140 Clamart (FR)
(72) Inventeur: Caillault, Claude, F-37390 Saint Roch (FR); Houdayer, Christophe, F-37000 Tours (FR); Rigaux, Christian, F-37260 Artannes sur Indre (FR); Lhote, Pascal, F-37540 Saint Cyr sur Loire (FR)
(74) Mandataire: Casalonga, Axel

(56) Documents cités:
- EP-A- 0 002 786
- EP-A- 0 192 339
- DE-A- 3 809 904
- FR-A- 2 227 779
- GB-A- 1 335 799
- US-A- 5 010 290
- US-A- 5 059 844

## Description

La présente invention concerne un organe de retenue axiale d'un roulement par rapport à un élément mécanique radialement adjacent, par exemple pour les cas où le roulement est monté dans un logement cylindrique ou autour d'un arbre. Une application particulière de l'invention consiste à assurer la retenue axiale d'un roulement à capteur d'informations dans un montage de moyeu de roue pour véhicule automobile équipé par exemple d'un système de freinage anti-blocage de roue.

Il existe de nombreux moyens pour assurer la retenue axiale d'un roulement par rapport à un élément mécanique radialement adjacent à la bague extérieure ou à la bague intérieure dudit roulement. Un moyen technique couramment utilisé pour sa simplicité de mise en oeuvre consiste en un circlips venant se loger par déformation élastique radiale dans une rainure circulaire du logement ou de l'arbre recevant le roulement. Le circlips forme ainsi une butée axiale efficace pour le roulement mis en place dans le logement ou sur l'arbre.

Dans le cas où le roulement est muni d'un bloc capteur d'informations, servant par exemple à mesurer la vitesse de rotation du roulement, le bloc capteur d'informations comporte un connecteur électrique dont la tête est située à l'extrémité libre d'une tige faisant saillie axialement et radialement du roulement. Etant donné que le circlips présente une ouverture circonférentielle, cette ouverture est utilisée pour le passage de la tige du connecteur du bloc capteur d'information.

L'utilisation d'un circlips comme organe de retenue axiale du roulement à capteur d'informations pose toutefois certains problèmes techniques. D'une part, l'encombrement radial du circlips dont certaines parties viennent en regard de l'entrefer des bague intérieures et extérieure du roulement, oblige à loger l'ensemble formé par l'élément capteur et l'élément codeur à l'intérieur d'un espace annulaire délimité axialement par le circlips et en particulier par les oreilles du circlips. Lesdites oreilles font saillie radialement de part et d'autre de l'ouverture circonférentielle du circlips pour permettre à un outil de monter et de démonter le circlips par rapport à la rainure circulaire du logement ou de l'arbre où est monté le roulement. L'espace ainsi délimité par le circlips peut ne pas être suffisant pour loger l'ensemble formé par l'élément capteur et l'élément codeur, surtout lorsqu'il s'agit d'un capteur de type passif comportant un bobinage et un concentrateur de flux magnétique annulaires dont les dimensions doivent être relativement importantes pour fournir un signal de bonne qualité. D'autre part, l'ouverture circonférentielle laissée par le circlips peut ne pas être de dimension suffisante pour permettre le passage de la tige de sortie du connecteur, ce qui obligerait à utiliser des circlips non standard à ouverture circonférentielle élargie.

*Le document FR A 2 227 779 décrit un dispositif d'arrêt axial pour pièces tournantes*, *constitué par une rondelle annulaire fermée à section droite en U s'encliquetant et s'arc-boutant par retour élastique radial dans une gorge usinée sur la surface d'un arbre sur lequel tourne la pièce à retenir*.

La présente invention a pour objet de remédier aux inconvénients précités d'un circlips classique en proposant un organe de retenue axiale du roulement qui, tout en gardant son efficacité mécanique, présente un faible encombrement radial, offre une ouverture circonférentielle importante et facile à mettre en place et à démonter.

Selon l'invention, on remplace le circlips traditionnel par un anneau métallique, déformable radialement, réalisé à partir d'une tôle mince et comportant une partie sensiblement cylindrique.

*L'anneau est ouvert et au moins une extrémité de la partie cylindrique est munie d'un rebord radial comprenant au moins une rangée de languettes repliées vers l'extérieur ou l'intérieur de la partie cylindrique, ledit rebord étant* destiné à venir coopérer à la fois avec une rainure aménagée dans ou sur l'organe mécanique radialement adjacent au roulement et avec une face de la bague non tournante du roulement. L'organe mécanique comportant la rainure circulaire supporte la bague non tournante du roulement.

De préférence, la partie sensiblement cylindrique fait saillie axialement par rapport à l'organe mécanique de support de roulement pour permettre d'une part l'accès d'un outil à l'organe de retenue axiale en vue de son montage et son démontage par rapport à la rainure circulaire de l'organe mécanique de support, et d'autre part de se comporter comme un bouclier annulaire contre des projections éventuelles d'eau, de gravillons ou d'autres particules extérieures afin de protéger le bloc capteur d'informations associé au roulement.

L'invention sera mieux comprise à l'étude de la description détaillée de quelques modes de réalisation pris à titre nullement limitatif et illustrés par les dessins annexés, sur lesquels :
la figure 1 est une vue en coupe axiale d'un montage d'un moyeu de roue comportant un circlips classique pour la retenue axiale du roulement à capteur d'informations,
la figure 2 est une vue axiale extérieure du montage de la figure 1 montrant la forme du circlips classique,
la figure 3 est une vue en coupe axiale d'un montage de moyeu de roue équipé d'un organe de retenue axiale de roulement selon l'invention,
la figure 4 est une vue de détail de la figure 3,
la figure 5 est une vue de détail équivalente à la figure 4 en représentant un second mode de réalisation de l'organe de retenue axiale selon l'invention,
les figures 6 à 9 représentent différentes vues de l'organe de retenue axiale selon la figure 5,
les figures 10 à 13 montrent les différentes vues de l'organe de retenue axiale selon la figure 4,
la figure 14 montre un organe de retenue axiale selon un troisième mode de réalisation de l'invention,
la figure 15 montre un organe de retenue axiale selon un quatrième mode de réalisation de l'invention,
la figure 16 montre un organe de retenue axiale selon un cinquième mode de réalisation de l'invention,

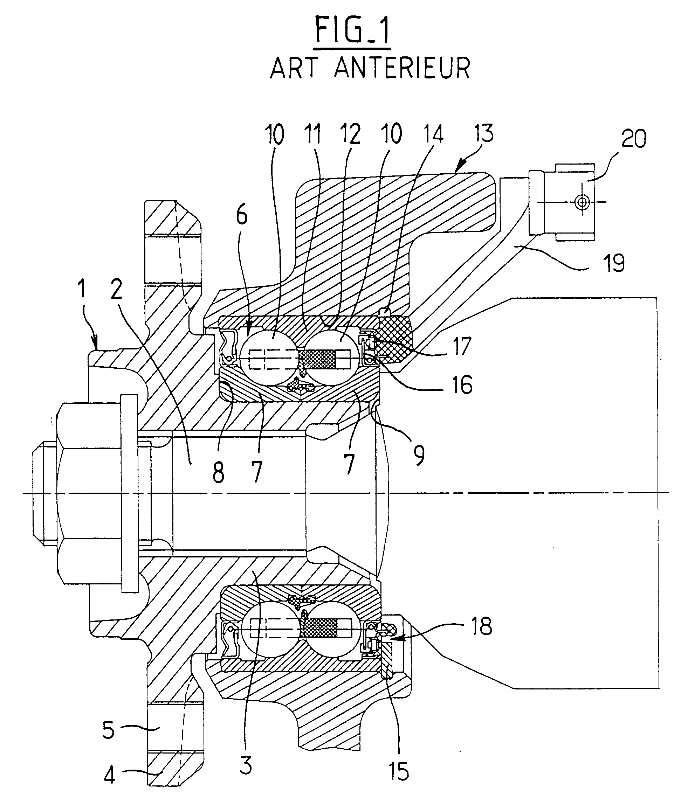

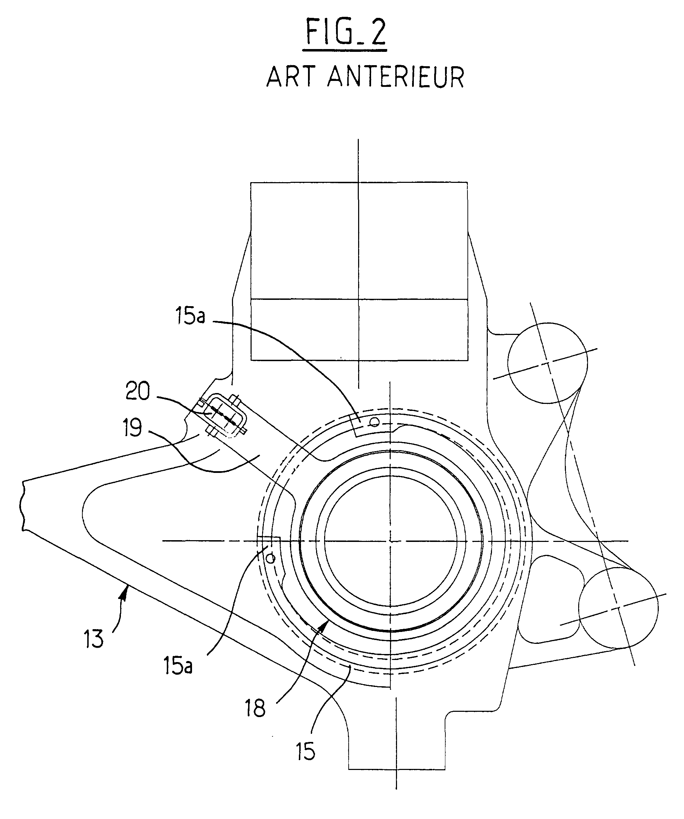

Pour mieux faire comprendre l'invention, une application particulière au domaine de construction automobile est choisie. Les figures 1 et 2 illustrent l'état de la technique considéré comme le plus proche de l'invention par la demanderesse.

Un moyeu de roue 1 pour roue motrice non représentée est entraîné en rotation par un arbre 2 intérieur. Le moyeu 1 comporte une portée cylindrique 3 et un collet radial 4 pourvu de trous taraudés 5 disposés circonférentiellement. La roue motrice non représentée est montée sur le collet radial 4 à l'aide des vis et écrous non représentés traversant les trous taraudés 5. Un roulement 6 est emmanché axialement par l'intermédiaire de sa bague intérieure 7 sur la portée cylindrique 3 du moyeu 1 et est immobilisé axialement entre un épaulement radial 8 de la portée cylindrique 3 du moyeu 1 et un épaulement radial 9 de l'arbre d'entraînement 2. Deux rangées de billes de roulement 10 sont disposées entre la bague intérieure tournante 7 et la bague extérieure non tournante 11 du roulement. La bague extérieure 11 est emmanchée dans un logement cylindrique 12 du porte-fusée 13. Le logement cylindrique 12 est pourvu d'une rainure circulaire 14 dans laquelle est monté un circlips 15 qui sert de butée axiale à la bague extérieure 11 du roulement 6. Le circlips 15 se présente sous la forme d'une rondelle annulaire ouverte dont les extrémités sont délimitées par des oreilles 15a (figure 2) faisant saillie radialement afin de permettre l'accès d'un outil non représenté. Le circlips 15 fait saillie radialement vers l'intérieur et délimite un espace annulaire avec les bagues extérieure 11 et intérieure 7 du roulement. Dans cet espace se trouve monté un capteur d'informations dont l'élément codeur 16 est rendu solidaire de la bague intérieure tournante 7 du roulement et dont l'élément capteur 17 est intégré dans un bloc capteur 18 rendu solidaire de la bague extérieure non tournante 11 du roulement. Le bloc capteur 18 comporte une tige 19 de sortie de connecteur s'étendant radialement et axialement vers l'extérieur pour se terminer par un connecteur électrique 20. Le connecteur 20 peut être relié à une unité centrale de traitement du signal non représentée pour lui fournir les informations concernant notamment la vitesse de rotation de la bague intérieure tournante 7 par rapport à la bague extérieure non tournante 11 du roulement 6, c'est-à-dire pour fournir la vitesse de rotation de la roue motrice correspondante.

On voit clairement que l'encombrement radial du circlips 15 réduit considérablement dans le sens axial l'espace disponible pour loger le bloc capteur 18, ce qui diminue en conséquence les performances potentielles de détection du capteur d'informations.

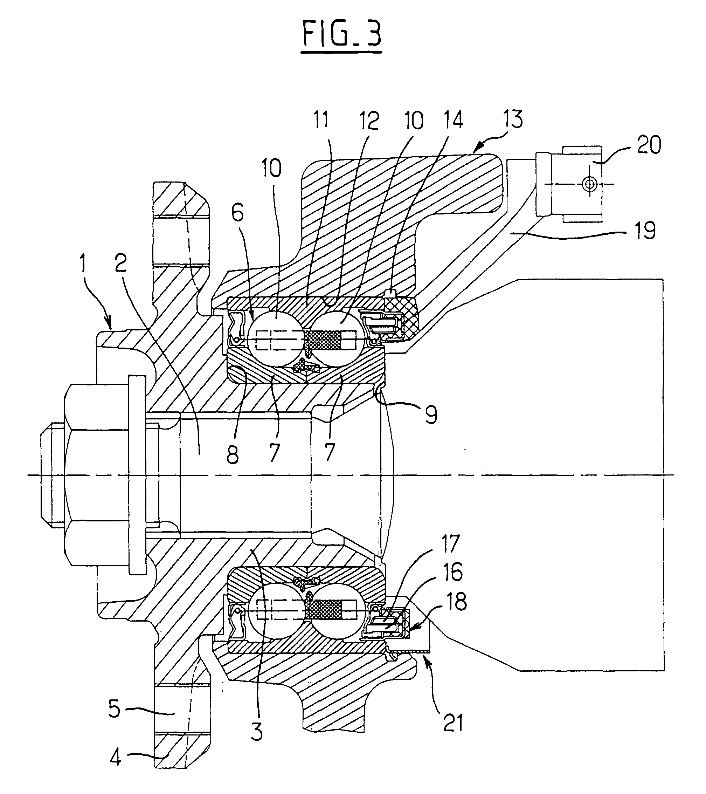

Sur la figure 3 est illustré un organe de retenue axiale 21 selon l'invention qui remplace le circlips 15 précédemment décrit. Le montage de moyeu de roue sur la figure 3 est comparable à celui illustré sur la figure 1. La différence essentielle entre ces deux figures réside dans la structure de l'organe de retenue axiale 21 (au lieu du circlips 15) et la structure et l'encombrement du capteur d'informations. L'organe de retenue axiale 21 coopère avec la rainure circulaire 14 du logement 12 du porte-fusée 13 et ne fait pas saillie radialement par rapport à la bague extérieure 11 non tournante du roulement. Ainsi, l'entrefer entre les bagues intérieure 7 et extérieure 11 du roulement 6 n'est pas limité dans le sens axial et le bloc capteur 18 ainsi que l'élément codeur 16 peuvent faire saillie axialement par rapport au roulement 6 laissant ainsi la possibilité d'utiliser un capteur de plus grande dimension et donc un capteur plus performant sur le plan du signal.

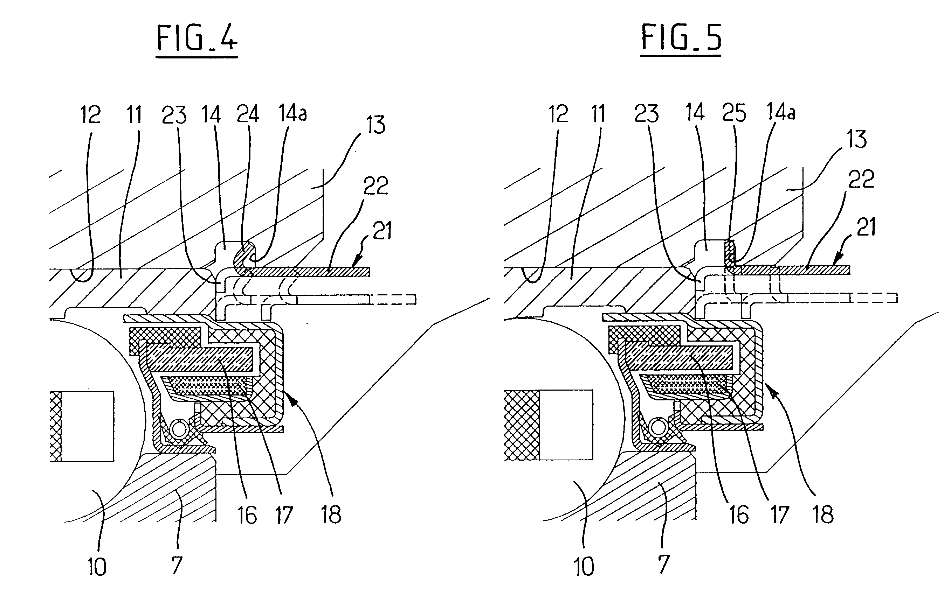

Les figures 4, 10 à 13 montrent un premier mode de réalisation de l'organe de retenue axiale 21 selon l'invention. L'organe de retenue axiale 21 est réalisé à partir d'une tôle mince sous forme d'un anneau ouvert qui peut être déformé radialement. L'anneau ouvert présente une partie cylindrique 22 avec un rebord radial sous forme d'une double rangée de languettes 23, 24 régulièrement réparties sur la circonférence de l'anneau et repliées alternativement dans le sens radial vers l'intérieur et vers l'extérieur de la partie cylindrique 22. Les languettes 24 repliées vers l'extérieur radialement sont en retrait axial par rapport aux languettes 23 repliées vers l'intérieur, font un angle aigu par rapport à la partie cylindrique 22 et, coopèrent avec le fond de la rainure circulaire 14 du logement cylindrique 12 dans lequel est emmanchée axialement la bague extérieure non tournante 11 du roulement. Les languettes intérieures 23 qui font saillie axialement par rapport aux languettes extérieures 24 sont repliées dans le sens radial pour constituer une butée axiale pour la bague extérieure 11 du roulement. L'étendue axiale des languettes intérieures 23 et extérieures 24 est choisie de telle sorte qu'elles puissent être bloquées axialement entre la bague extérieure non tournante 11 du roulement d'une part et une paroi opposée 14a sensiblement radiale de la rainure circulaire 14.

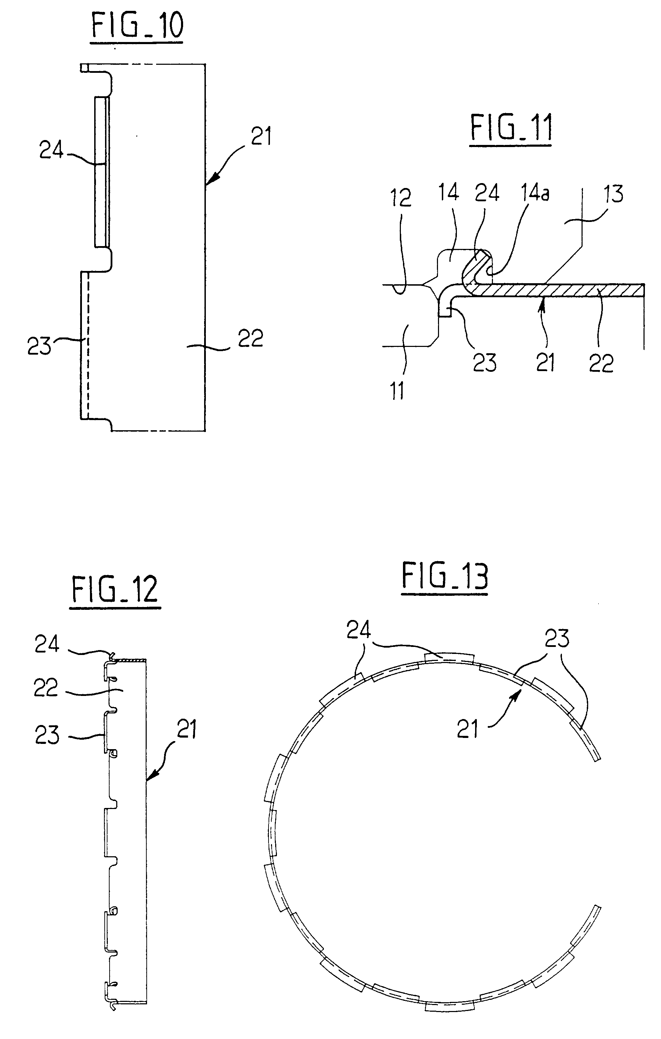

Lorsque l'organe de retenue axiale 21 est mis en place, la partie cylindrique 22 fait saillie axialement par rapport au porte-fusée 13 afin de permettre d'une part la manipulation de l'organe de retenue axial 21 par l'intermédiaire de la partie cylindrique 22 pour créer sa déformation radiale permettant le montage ou le démontage, et d'autre part à la partie cylindrique 22 en saillie axiale de constituer un écran de protection pour le capteur d'informations 16 et 17 contre les projections extérieures éventuelles. La déformation élastique radiale de l'organe de retenue axiale 21 est provoquée facilement en exerçant un effort pour rapprocher les deux extrémités circonférentielles de l'anneau ouvert (figure 13) pour pouvoir introduire et retirer axialement l'organe de retenue axiale 21 par rapport à la rainure circulaire 14 (voir partie en pointillés de la figure 4).

Une variante d'exécution de l'organe de retenue axiale 21 par rapport à ce qui vient d'être décrit est représentée sur les figures 5 à - 9. Dans ce mode de réalisation, les languettes repliées vers l'extérieur 25 sont dans le sens radial au lieu d'être inclinées comme les languettes 24. Les languettes extérieures radiales 25 coopèrent avec la paroi radiale 14a de la rainure 14 pour constituer une butée axiale.

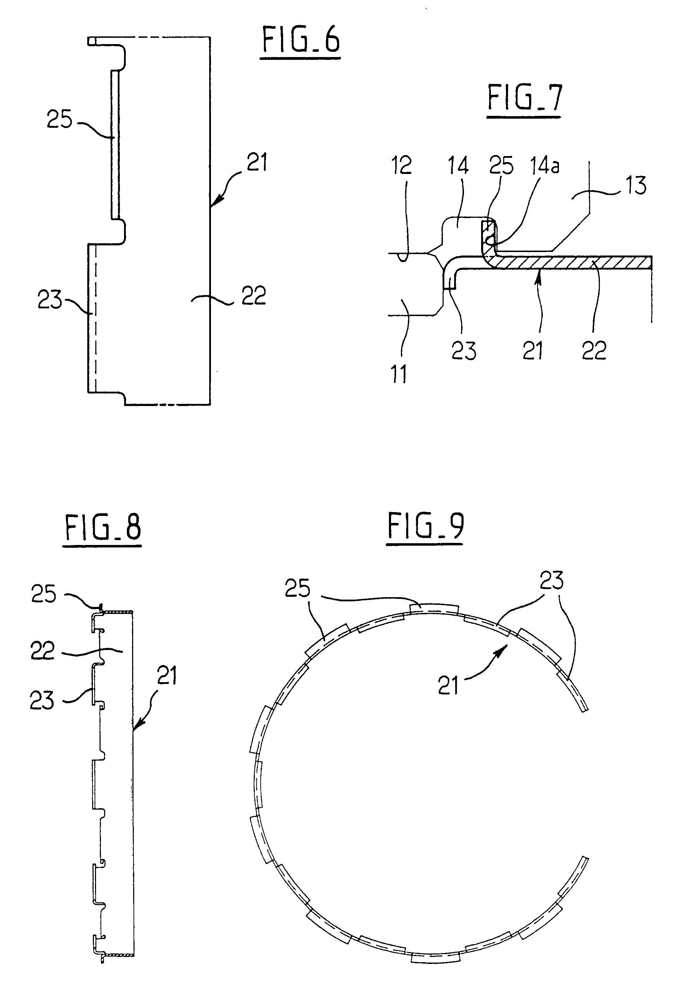

Les deux modes de réalisation illustrés sur les figures 3 à 13 font état de languettes 23, 24, 25 rabattues en quinconce de façon à former deux rangées dont les faces sont axialement décalées, une rangée de languettes 23 étant repliée radialement vers l'intérieur et l'autre rangée de languettes 24, 25 étant repliée radialement vers l'extérieur, de telle sorte que la rangée repliée vers l'intérieur coopère avec la face de la bague extérieure 11 du roulement et que la rangée repliée vers l'extérieur coopère avec la face interne opposée 14a ou une arête interne de la rainure circulaire 14 aménagée dans le logement 12 réservé au roulement. Les languettes 23, 24 et 25 sont obtenues par repli de matière à partir d'une extrémité de la partie cylindrique 22.

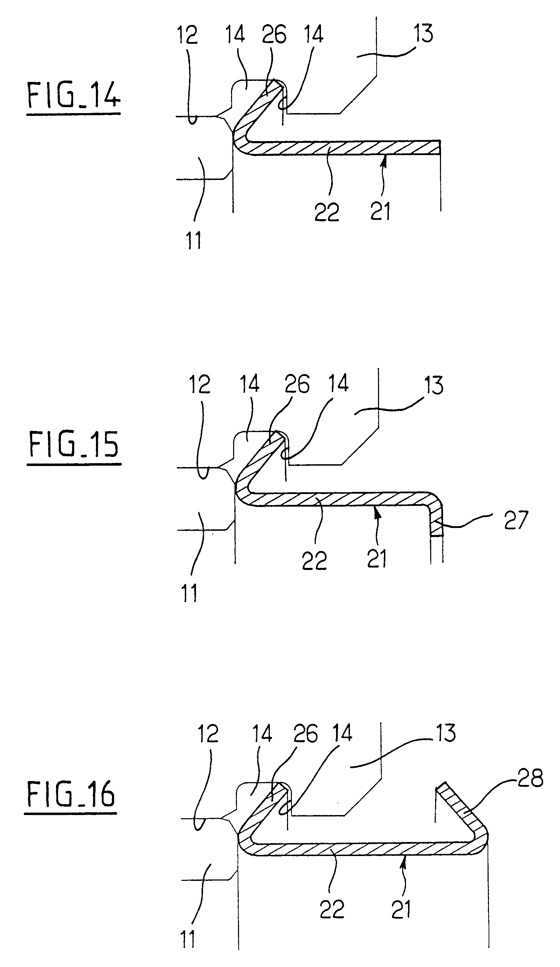

Sur la figure 14 est représenté un troisième mode de réalisation de l'organe de retenue axiale 21 dont le rebord radial est constitué par un rebord 26 replié vers l'extérieur radialement et faisant un angle aigu par rapport à la partie cylindrique 22. Le rebord replié 26 présente au moins en trois points de sa circonférence une étendue axiale égale à la distance prédéterminée entre la face de la bague extérieure non tournante 11 du roulement et la face interne opposée 14a de la rainure circulaire 14 afin de constituer une butée axiale pour le roulement. Ce rebord 26 est discontinu et constitué par une rangée de languettes non représentées. Le pliage en biais du rebord 26 permet à la base du repli de coopérer avec la face radiale de la bague non tournante 11 du roulement et à la partie extrémité libre du repli de coopérer avec l'arête opposée de fond de la rainure circulaire 14.

Il est possible de renforcer la rigidité radiale de l'anneau ouvert vu la faible épaisseur de la tôle utilisée. Pour ce faire, on peut ajouter à l'autre extrémité de la partie cylindrique 22 une nervure annulaire de raidissage 27, 28 (figures 15 et 16). Cette nervure annulaire de raidissage peut présenter la forme d'un rebord radial intérieur 27 (figure 15) ou un rebord radial extérieur 28 (figure 16), lequel peut être symétrique par rapport au rebord radial 26 de butée, de façon à permettre le montage sans orientation préalable de l'organe de retenue axiale 21.

D'une manière générale, les modes de réalisation de l'organe de retenue axiale 21 illustrés sur les figures 3 à 16 peuvent être adaptés pour le cas où la bague intérieure est non tournante. Il suffirait dans ce cas d'inverser radialement le rebord radial, c'est-à-dire au lieu de faire saillie radialement vers l'extérieur, le rebord fait saillie radialement vers l'intérieur par rapport à la partie cylindrique 22 et vice versa. Grâce à l'invention, on peut bénéficier de beaucoup plus d'espace dans le sens axial entre les bagues intérieure et extérieure du roulement 6 pour implanter l'ensemble formé par l'élément capteur 17 et l'élément codeur 16 du capteur d'informations. Contrairement à un circlips classique en effet, l'anneau ouvert 21 constituant l'organe de retenue axiale ne déborde pas radialement vers l'intérieur de la face de la bague extérieure (ou vers l'extérieur de la face de la bague intérieure) du roulement, et par conséquent laisse libre l'espace situé dans le prolongement axial de l'entrefer entre les bagues intérieure et extérieure du roulement. On peut donc mettre à profit cet espace pour l'implantation de capteurs de plus grandes dimensions et donc susceptible de fournir un signal plus puissant. De même, la largeur de l'ouverture de l'anneau élastique 21 permet le passage aisé de la tige 19 du connecteur du bloc capteur 18 comparé à un circlips classique.

## Revendications

1. Organe de retenue axiale d'un roulement (6), notamment un roulement à capteur d'informations, par rapport à un élément mécanique (13, 34) radialement adjacent au roulement, le dit organe étant constitué par un anneau métallique (21), radialement déformable élastiquement, réalisé à partir d'une tôle mince, comportant une partie sensiblement cylindrique (22), et étant ouvert, au moins une extrémité de la partie sensiblement cylindrique (22) étant munie d'un rebord radial (23 à 26, 29 à 33, 36) *comprenant au moins une rangée de languettes repliées vers l'extérieur ou l'intérieur de la partie cylindrique, ledit rebord étant* destiné à venir coopérer à la fois avec une rainure circulaire (14, 37) aménagée sur ou dans l'élément mécanique radialement adjacent au roulement et avec la bague non tournante (11, 35) du roulement, de façon à former une butée axiale pour ce dernier.

2. Organe de retenue axiale selon la revendication 1, **caractérisé en ce que** le rebord radial est constitué de deux rangées de languettes alternées (23, 24 ou 25) repliées respectivement vers l'intérieur et vers l'extérieur de la partie cylindrique (22), la première rangée de languettes (23) étant destinée à coopérer avec la bague non tournante (11) du roulement et la seconde rangée (24, 25) de languettes destinée à coopérer avec une paroi radiale (14a) de la rainure circulaire (14).

3. Organe de retenue axiale selon la revendication 1, **caractérisé en ce que** le rebord radial est constitué par un rebord replié (26) faisant un angle aigu avec la partie cylindrique (22), la base du repli coopérant avec la bague non tournante (11) du roulement et l'extrémité du repli coopérant avec le fond de la rainure circulaire (14).

4. Organe de retenue axiale selon la revendication 1, **caractérisé en ce que** le rebord radial présente une forme de U replié (29, 30, 36) dont le fond coopère avec la rainure circulaire (14, 37).

5. Organe de retenue axiale selon la revendication 1, **caractérisé en ce que** le rebord radial est discontinu dans le sens circonférentiel avec des ondulations (31) à amplitude radiale.

6. Organe de retenue selon l'une des revendications précédentes, **caractérisé en ce que** la partie cylindrique (22) fait saillie axialement par rapport à l'élément mécanique adjacent (13).

7. Organe de retenue axiale selon la revendication 6, **caractérisé en ce que** l'extrémité libre de la partie cylindrique (22) comporte une nervure circulaire de raidissement (27, 28).

8. Organe de retenue axiale selon l'une des revendications précédentes, **caractérisé en ce que** les deux extrémités de la partie cylindrique (22) sont pourvues de rebords radiaux qui sont symétriques par rapport à un plan radial.

9. *Ensemble* de moyeu de roue comportant un roulement (6) dont la bague non tournante (11, 35) est immobilisée par un organe de retenue axiale selon l'une des revendications précédentes.

## Patentansprüche

1. Axialhalteelement, um ein Wälzlager (6), insbesondere ein Wälzlager mit einem Messwertaufnehmer, in Bezug auf ein mechanisches Element (13, 34), das dem Lager radial benachbart angeordnet ist, in axialer Richtung zu sichern, wobei das Axialhalteelement durch einen offenen Ring (21) aus Metall gebildet ist, der in Radialrichtung elastisch verformbar ist, der aus einem dünnen Blech gefertigt ist und der einen im Wesentlichen zylindrischen Abschnitt (22) aufweist, dessen wenigstens ein Ende mit einem radialen Rand (23 bis 26, 29 bis 33, 36) versehen ist, der wenigstens eine Anzahl von ausgehend von dem zylindrischen Abschnitt nach außen oder nach innen gebogenen Zungen aufweist, wobei der Rand dazu vorgesehen ist, gleichzeitig sowohl mit einer Ringnut (14, 37), die an oder in dem dem Wälzlager radial benachbarten mechanischen Element vorgesehen ist, als auch mit dem stillstehenden Ring (11, 35) des Wälzlagers in der Weise zusammenzuwirken, um ein axiales Widerlager für das Letztere zu bilden.

2. Axialhaltelement nach Anspruch 1, **dadurch gekennzeichnet, dass** der radiale Rand durch zwei Reihen von einander abwechselnden Zungen (23, 24 oder 25) gebildet ist, die jeweils ausgehend von dem zylindrischen Abschnitt (22) nach innen bzw. nach außen gebogen sind, wobei die erste Reihe von Zungen (23) dazu vorgesehen ist, mit dem stillstehenden Ring (11) des Wälzlagers zusammenzuwirken, und die zweite Reihe (24, 25) von Zungen dazu vorgesehen ist, mit einer radialen Wand (14a) der Ringnut (14) zusammenzuwirken.

3. Axialhaltelement nach Anspruch 1, **dadurch gekennzeichnet, dass** der radiale Rand durch einen umgebogenen Rand (26) gebildet ist, der mit dem zylindrischen Abschnitt (22) einen spitzen Öffnungswinkel einschließt, wobei der Scheitel des umgebogenen Rands mit dem stillstehenden Ring (11) des Wälzlagers zusammenwirkt und das Ende des umgebogenen Rands mit dem Grund der Ringnut (14) zusammenwirkt.

4. Axialhalteelement nach Anspruch 1, **dadurch gekennzeichnet, dass** der radiale Rand eine zu einem U umgebogene Form (29, 30, 36) aufweist ist, wobei der Verbindungssteg des U mit der Ringnut (14, 37) zusammenwirkt.

5. Axialhaltemittel nach Anspruch 1, **dadurch gekennzeichnet, dass** der radiale Rand in Umfangsrichtung derart unterbrochen ist, dass er die Form von radial oszillierenden Wellen (31) aufweist.

6. Axialhaltemittel nach einem der vorhergehenden Ansprüche, **dadurch gekennzeichnet, dass** der zylindrische Abschnitt (22) in Bezug auf das benachbarte mechanischen Element (13) in Axialrichtung hervorsteht.

7. Axialhaltemittel nach Anspruch 6, **dadurch gekennzeichnet, dass** das freie Ende des zylindrischen Abschnitts (22) eine ringförmige Versteifungsrippe (27, 28) aufweist.

8. Axialhaltemittel nach einem der vorhergehenden Ansprüche, **dadurch gekennzeichnet, dass** die beiden Enden des zylindrischen Abschnitts (22) mit radialen Rändern versehen sind, die in Bezug auf eine radiale Ebene symmetrisch zueinander sind.

9. Radnabeneinheit mit einem Wälzlager (6), dessen stillstehender Ring (11, 35) durch ein Axialhaltemittel nach einem der vorhergehenden Ansprüche festgehalten ist.

## Claims

1. Member for axially retaining a rolling-contact bearing (6), especially a rolling-contact bearing with information sensor, relative to a mechanical element (13, 34) radially adjacent to the rolling-contact bearing, consisting of an open metallic ring (21) which can be elastically deformed radially, produced from a thin sheet of metal, and including a substantially cylindrical part (22), at least one end of which is equipped with a radial rim (23 to 26, 29 to 33, 36) comprising at least one row of tabs folded towards the outside or inside of the cylindrical part, the said rim being intended to interact both with a circular groove (14, 37) formed on or in the mechanical element radially adjacent to the rolling-contact bearing and with the non-rotating race (11, 35) of the rolling-contact bearing, so as to form an axial limit stop for the latter.

2. Axial retention member according to Claim 1, **characterized in that** the radial rim consists of two rows of alternating tabs (23, 24 or 25) folded respectively towards the inside and towards the outside of the cylindrical part (22), the first row of tabs (23) being intended to interact with the non-rotating race (11) of the rolling-contact bearing, and the second row (24, 25) of tabs intended to interact with a radial wall (14a) of the circular groove (14).

3. Axial retention member according to Claim 1, **characterized in that** the radial rim consists of a folded-back rim (26) forming an acute angle with the cylindrical part (22), the base of the fold interacting with the non-rotating race (11) of the rolling-contact bearing, and the end of the fold interacting with the bottom of the circular groove (14).

4. Axial retention member according to Claim 1, **characterized in that** the radial rim has a folded U-shape (29, 30, 36), the bottom of which interacts with the circular groove (14, 37).

5. Axial retention member according to Claim 1, **characterized in that** the radial rim is discontinuous in the circumferential direction, with undulations (31) having radial amplitude.

6. Retaining member according to one of the preceding claims, **characterized in that** the cylindrical part (22) projects axially relative to the adjacent mechanical element (13).

7. Axial retention member according to Claim 6, **characterized in that** the free end of the cylindrical part (22) includes a circular stiffening rib (27, 28).

8. Axial retention member according to one of the preceding claims, **characterized in that** the two ends of the cylindrical part (22) are provided with radial rims which are symmetric relative to a radial plane.

9. Wheel hub assembly including a rolling-contact bearing (6) in which the non-rotating race (11, 35) is immobilized by an axial retention member according to one of the preceding claims.
